# EUROPÄISCHE PATENTSCHRIFT

(11) **EP 3 947 819 B1**
(45) Veröffentlichungstag und Bekanntmachung des Hinweises auf die Patenterteilung: **18.06.2025**
(21) Anmeldenummer: 20718554.7
(22) Anmeldetag: 27.03.2020
(51) Int. Cl.: E01C 19/26, E01C 19/27, E01C 19/28, E02D 3/026, E02D 3/032, B60K 6/12, B60K 6/46, B60L 1/00, B60L 7/10, B60L 50/51, B60W 30/18

(54) **BODENVERDICHTUNGSMASCHINE MIT ELEKTRISCHEM MOTOR UND VERFAHREN ZUM BETRIEB**
SOIL-COMPACTING MACHINE HAVING AN ELECTRIC MOTOR AND METHOD FOR OPERATION
MACHINE DE COMPACTAGE DE SOL AVEC MOTEUR ÉLECTRIQUE ET PROCÉDÉ DE FONCTIONNEMENT

(30) Priorität: 03.04.2019 DE 102019002439
(43) Veröffentlichungstag der Anmeldung: 09.02.2022
(73) Patentinhaber: BOMAG GmbH, 56154 Boppard (DE)
(72) Erfinder: KIRST, Timo, 56154 Boppard (DE); HAMMEN, Björn, 56154 Boppard (DE); WOLFRAM, Markus, 56154 Boppard (DE)
(74) Vertreter: Zimmermann & Partner Patentanwälte mbB
(86) Internationale Anmeldenummer: PCT/EP2020/000077
(87) Internationale Veröffentlichungsnummer: WO 2020/200509

(56) Entgegenhaltungen:
- EP-A1- 3 128 076
- EP-A1- 3 128 076
- EP-A2- 1 524 367
- EP-A2- 1 524 367
- EP-A2- 1 524 367
- WO-A1-2015/094023
- WO-A1-2019/174897
- CN-A- 101 392 492
- CN-A- 101 392 492
- DE-A1- 102010 006 993
- DE-A1- 102012 005 299
- DE-A1- 102012 005 299
- SU-A1- 1 237 730
- SU-A1- 1 237 730
- US-A1- 2013 006 483

## Beschreibung

Die Erfindung betrifft eine Bodenverdichtungsmaschine zur Verdichtung eines Bodens, insbesondere eine Tandemwalze, einen Walzenzug, eine Gummiradwalze oder eine Grabenwalze. Darüber hinaus betrifft die Erfindung ein Verfahren zum Betrieb einer Bodenverdichtungsmaschine.

Gattungsgemäße Bodenverdichtungsmaschinen werden vorwiegend im Straßen- und Wegebau sowie beim Bau von Plätzen oder Start- und Landebahnen beispielsweise auf Flughäfen eingesetzt. Sie weisen üblicherweise einen Maschinenrahmen und wenigstens ein Fahrwerk auf. Das Fahrwerk umfasst typischerweise wenigstens eine Walzenbandage, mit der die Bodenverdichtungsmaschinen im Arbeitsbetrieb über den Boden rollen und diesen verdichten. Die Außenumfangsfläche der Walzenbandage kann dabei glatt oder auch strukturiert sein, wie bei sogenannten Brecherbandagen üblich, die beispielsweise zum Zerkleinern von Gestein Verwendung finden. Neben Walzenbandagen sind auch Gummiräder zur Verdichtung des Bodens im Einsatz, wobei bei Gummirädern durch die elastische Verformbarkeit ein Knet- und Walkeffekt entsteht, der insbesondere einen Porenschluss an der Bodenoberfläche herbeiführt. Zum Antrieb des Fahrwerkes umfassen die Bodenverdichtungsmaschinen typischerweise einen Fahrantrieb, beispielsweise einen Hydraulikmotor, der die Walzenbandage oder das Rad in Rotation versetzt. Typische Bodenverdichtungsmaschinen sind knick- oder schemelgelenkt und weisen ebenfalls einen Lenkantrieb zur Anpassung der Fahrtrichtung der Bodenverdichtungsmaschine auf. Der Lenkantrieb ist typischerweise ebenfalls ein hydraulischer Aktuator, der die von einem Bediener beispielsweise über ein Lenkrad oder einen Joystick eingegebenen Steuerungsbefehle umsetzt. Es ist ebenfalls bekannt, gattungsgemäße Bodenverdichtungsmaschinen mit einem Vibrationsantrieb auszustatten, der die Walzenbandage oder das Rad in Vibrationen versetzt, um die Verdichtungsleistung zu erhöhen. Die entsprechenden Vibrationsantriebe werden typischerweise ebenfalls hydraulisch betrieben.

Um auf gattungsgemäßen Bodenverdichtungsmaschinen überhaupt Antriebsenergie zum Betrieb der Maschine und insbesondere der hydraulischen Komponenten zur Verfügung zu stellen, kommt typischerweise ein Verbrennungsmotor zum Einsatz. Hierbei handelt es sich zumeist um Dieselverbrennungsmotoren, die die notwendige Energie zum Betrieb sämtlicher weiteren Komponenten der Bodenverdichtungsmaschinen zur Verfügung stellen. Zum Betrieb kleinerer elektrischer beziehungsweise elektronischer Komponenten, beispielsweise von Beleuchtungseinrichtungen oder dem Bordcomputer, wird typischerweise eine Lichtmaschine eingesetzt, die ebenfalls vom Verbrennungsmotor getrieben wird.

Die Nachteile des Betriebes der Bodenverdichtungsmaschinen über einen Dieselverbrennungsmotor treten allerdings in letzter Zeit mit den steigenden Ansprüchen an Umwelt- und Arbeitsbedingungen immer mehr in Erscheinung. So unterliegen die Bodenverdichtungsmaschinen aufgrund der Schadstoffemissionen der Dieselmotoren immer strengeren Umweltvorschriften. Darüber hinaus wird auch die hohe Geräuschemission von Verbrennungsmotoren zunehmend als unangenehm empfunden. Auch der grundsätzlich schlechte Wirkungsgrad von Verbrennungsmotoren und der hohe Kraftstoffverbrauch, der beispielsweise dadurch verschärft wird, dass es nicht immer möglich ist, die Verbrennungsmotoren an ihrem optimalen Leistungspunkt zu betreiben, sind Probleme, die sich den Herstellern moderner Bodenverdichtungsmaschinen stellen.

Bodenverdichtungsmaschinen mit wenigstens einem Elektromotor sind bekannt, beispielsweise aus der WO2019/174897A1, der WO2015/094023A1, der EP1524367A7 und der US2013/006483A1. CN101392492A offenbart eine Walze, für die es vorgesehen ist, dass der Rotor eines Elektromotors mit der Walzbandage verbunden ist und synchron mit der Walzbandage rotiert. Der Bandagenmantelinnenraum kann mit Wasser gefüllt sein. SU1237730A1 offenbart eine Walze mit einem elektromotorischen Antrieb. EP3128076A1 offenbart eine Walzbandage mit einem elektromotorischen Antrieb zur Erzeugung eines Oszillations-Drehmoments. Ferner ist es bekannt, eine Vibrationswalze mit einem Hydraulikfluiddruckspeicher auszustatten, wie in der DE102010006993A1 offenbart.

Es ist vor diesem Hintergrund des Standes der Technik die Aufgabe der vorliegenden Erfindung, eine Bodenverdichtungsmaschine mit einem Elektromotor und ein Verfahren zum Betrieb einer Bodenverdichtungsmaschine mit einem Elektromotor weiter zu verbessern. Es sollen insbesondere der Wirkungsgrad erhöht sowie der Kraftstoffverbrauch gesenkt werden.

Die Lösung dieser Aufgabe gelingt mit einer Bodenverdichtungsmaschine und einem Verfahren gemäß den unabhängigen Ansprüchen. Bevorzugte Weiterbildungen der Erfindung sind in den abhängigen Ansprüchen angegeben.

Beispielsweise kann ein elektrischer Motor dazu eingesetzt werden, eine oder mehrere Hydraulikpumpen anzutreiben, die wiederum Hydraulikmotoren antreiben. Auf diese Weise können Hydraulikmotoren, beispielsweise des Fahrantriebs oder des Lenkantriebs indirekt von einem Elektromotor angetrieben werden. Ein elektrischer Motor kann mit anderen Worten zum Antrieb des Fahrantriebs und/oder des Lenkantriebs ausgebildet sein. Dies kann beispielsweise indirekt über den Antrieb einer Hydraulikpumpe erfolgen. Der Antrieb des elektrischen Motors / Elektromotors selbst erfolgt beispielsweise über einen Verbrennungsmotor, beispielsweise einen Dieselverbrennungsmotor, der seinerseits einen Generator antreibt. Der Generator wandelt die vom Verbrennungsmotor kommende Antriebsenergie in elektrische Energie um, die entweder direkt zum Antrieb des elektrischen Motors eingesetzt oder in einem elektrischen Energiespeicher, beispielsweise einem Akkumulator oder einer Batterie, zwischengespeichert wird. Bevorzugt ist die Zwischenspeicherung der elektrischen Energie in einem elektrischen Energiespeicher. In diesem Fall kann der Verbrennungsmotor konstant an seinem optimalen Leistungspunkt betrieben werden, um den Generator zu betreiben. Schwankungen im Energieverbrauch des elektrischen Motors je nach der Betriebssituation der Bodenverdichtungsmaschine werden vom elektrischen Energiespeicher ausgeglichen. Auf diese Weise lässt sich die vom Verbrennungsmotor benötigte Kraftstoffmenge bereits deutlich reduzieren, da der Verbrennungsmotor nicht ständig in unterschiedlichen Drehzahlbereichen betrieben werden muss.

Alternativ ist es gemäß einer bevorzugten Ausführungsform vorgesehen, dass die Bodenverdichtungsmaschine verbrennungsmotorfrei ausgebildet ist. Die Bodenverdichtungsmaschine weist also keinen Verbrennungsmotor auf. Der elektrische Motor, der beispielsweise eine oder mehrere Hydraulikpumpen zum Betrieb der weiteren Maschinenkomponenten antreibt, wird aus einem elektrischen Energiespeicher, beispielsweise einem Akkumulator oder einer Batterie, betrieben. Wie schon zuvor beschrieben, wird der elektrische Motor eingesetzt, um weitere Komponenten der Bodenverdichtungsmaschine, beispielsweise hydraulische Verbraucher, anzutreiben. Hierfür treibt der elektrische Motor wiederum eine oder mehrere Hydraulikpumpen an, die einen oder mehrere Hydraulikmotoren betreiben. Diese wiederum betreiben den Fahrantrieb und/oder den Lenkantrieb und/oder den Vibrationsantrieb der Bodenverdichtungsmaschine sowie gegebenenfalls weitere Komponenten.

Es ist erfindungsgemäß vorgesehen, dass die Bodenverdichtungsmaschine einen Vibrationsantrieb umfasst, der zur Erregung einer Vibration an dem Rad oder der Walzenbandage ausgebildet ist, wobei der Vibrationsantrieb einen elektrischen Motor umfasst und ausschließlich elektrisch betreibbar ist.Die Vibration des Rades oder der Walzenbandage wird somit von einem elektrischen Motor bewerkstelligt und nicht, wie vorstehend beschrieben, von einem hydraulischen Motor. Der elektrische Motor wird also unmittelbar für die Vibration des Rades oder der Walzenbandage eingesetzt. Somit kommt der Vibrationsantrieb der Bodenverdichtungsmaschine ohne Hydraulik aus. Das Antriebssystem für den Vibrationsantrieb ist somit vollelektrisch ausgebildet. Ergänzend kann es vorgesehen sein, dass der Fahrantrieb und/oder der Lenkantrieb einen elektrischen Motor umfasst und ausschließlich elektrisch betreibbar ist. In diesen Ausführungsformen wird also die Fortbewegung der Bodenverdichtungsmaschine über den Fahrantrieb und/oder die Anpassung der Fahrtrichtung der Bodenverdichtungsmaschine über den Lenkantrieb von einem elektrischen Motor bewerkstelligt und nicht, wie vorstehend beschrieben, von einem hydraulischen Motor. Somit kommen dann auch der Fahrantrieb und/oder der Lenkantrieb der Bodenverdichtungsmaschine ohne Hydraulik aus.

Gemäß einer besonders bevorzugten Ausführungsform ist die gesamte Bodenverdichtungsmaschine derart ausgebildet, dass sie ausschließlich elektrisch über elektrische Motoren betreibbar ist. Sie umfasst daher weder einen Verbrennungsmotor, noch ein Hydrauliksystem und weicht daher von der üblichen Bauweise ab. Die entsprechende erfindungsgemäße Bodenverdichtungsmaschine ist also sowohl verbrennungsmotorfrei als auch hydraulikfrei beziehungsweise hydrauliksystemfrei ausgebildet. Sämtliche Komponenten der Bodenverdichtungsmaschine, die einen Antrieb benötigen, werden von einem elektrischen Motor betrieben, so insbesondere beispielsweise der Fahrantrieb, der Lenkantrieb und der Vibrationsantrieb. Insbesondere weisen diese jeweils einen eigenen elektrischen Motor auf, die aus einem elektrischen Energiespeicher mit elektrischer Energie versorgt werden. Durch den Verzicht auf einen Verbrennungsmotor werden von der erfindungsgemäßen Bodenverdichtungsmaschine keine Schadstoffemissionen verursacht. Darüber hinaus wird eine deutliche Geräuschminderung erreicht. Durch die Verwendung von Elektromotoren wird ein höherer Wirkungsgrad erreicht, sodass weniger Nennleistung benötigt wird. Darüber hinaus reduziert sich die Teilevielfalt der Maschinen, insbesondere bei zusätzlichem Verzicht auf ein Hydrauliksystem, sodass sowohl die Herstellung als auch die Wartung der erfindungsgemäßen Bodenverdichtungsmaschinen deutlich günstiger sind. Servicetätigkeiten wie beispielsweise Öl- oder Filterwechsel sind nicht mehr notwendig. Der freiwerdende Motorraum kann fast ausschließlich als Stauraum für Akkumulatoren/Batterien verwendet werden, so dass lange Arbeitszeiten und/oder eine kompaktere Bauweise der Maschine ermöglicht werden.

Als elektrische Energiespeicher kommen insbesondere Akkumulatoren oder Batterien infrage. Besonders bevorzugt sind wiederaufladbare elektrische Energiespeicher, insbesondere Akkumulatoren. So kann der elektrische Energiespeicher beispielsweise ein Lithium-Ionen-Akkumulator oder ein Nickel-Metallhydrid-Akkumulator (NiMH) sein.

Besonders vorteilhaft ist es, wenn der elektrische Energiespeicher derart ausgebildet und auch derart an der Bodenverdichtungsmaschine angeordnet ist, dass er mit wenigen Handgriffen und insbesondere werkzeugfrei austauschbar ist. Werkzeugfrei bedeutet, dass wenigstens eine Befestigungsvorrichtung zur Lagesicherung des jeweiligen Energiespeichers vorgesehen ist, die exklusiv manuell lösbar und festlegbar ist. Hierfür sind beispielsweise auf der Bodenverdichtungsmaschine spezielle Steckplätze vorgesehen, an denen der oder die elektrischen Energiespeicher, die mit komplementären Anschlüssen versehen sind, einfach eingesetzt und dabei kontaktiert werden können.

Es ist bevorzugt, wenn der oder die elektrischen Energiespeicher, insbesondere Akkupakete, als austauschbare Module ausgebildet sind, deren Einzelgewicht maximal 15 kg, insbesondere maximal 10 kg, beträgt. Auf diese Weise ist gewährleistet, dass die einzelnen Module bequem an der Maschine manuell ausgetauscht werden können und zudem ohne spezielle Hilfsmittel zu der Maschine hin und/oder von der Maschine weg transportiert werden können.

Grundsätzlich kann der elektrische Motor des Vibrationsantriebs an einer beliebigen Stelle der Bodenverdichtungsmaschine angeordnet sein. So kann der elektrische Motor beispielsweise über ein Getriebe mit einem im Rad oder in der Walzenbandage angeordneten Schwingungserreger verbunden sein und diesen von außerhalb des Rades beziehungsweise der Walzenbandage antreiben. Gemäß einer bevorzugten Ausführungsform ist allerdings der gesamte Vibrationsantrieb mit dem elektrischen Motor in dem Rad oder der Walzenbandage angeordnet. Auf diese Weise muss lediglich elektrische Energie beispielsweise über ein Kabel von außen in das Innere des Rades beziehungsweise der Walzenbandage eingeleitet werden, um den elektrischen Motor des Vibrationsantriebes zu betreiben. Dieser wiederum versetzt den Schwingungserreger in Rotation, was die Vibrationen bewirkt. Auf diese Weise kann der ansonsten ungenutzte Raum innerhalb des Rades beziehungsweise der Walzenbandage ausgenutzt werden.

Im Arbeitsbetrieb der Bodenverdichtungsmaschine wird die Vibration, und damit der Vibrationsantrieb, regelmäßig ein- und ausgeschaltet. Als Schwingungserreger kommen üblicherweise rotierende Unwuchten zum Einsatz. Diese rotieren auch nach dem Abschalten üblicherweise noch lange nach, was als nachteilig empfunden wird. Es ist daher ein Rückgewinnungssystem für die in den rotierenden Unwuchtmassen gespeicherte Energie vorgesehen, das zum einen die Energiebilanz der Bodenverdichtungsmaschine verbessert und zum anderen zu einem schnelleren Stillstand des Vibrationserregers nach dem Abschalten führt. Es ist erfindungsgemäß vorgesehen, dass der Vibrationsantrieb eine elektrische Bremse umfasst, die derart ausgebildet ist, dass sie die Nachlaufzeit des Vibrationsantriebs verkürzt und beim Bremsen elektrische Energie zurückgewinnt. Dies kann beispielsweise dadurch realisiert werden, dass der elektrische Motor nach dem Abschalten des Vibrationsantriebes als Generator wirkt, der die in den rotierenden Schwingungsmassen gespeicherte Rotationsenergie in elektrische Energie umwandelt und beispielsweise in den elektrischen Energiespeicher einleitet. Auf diese Weise wird dem Schwingungserreger Energie entzogen, der dadurch schneller zum Stillstand kommt. Gleichzeitig steht die so gewonnene Energie zur erneuten Verwendung zur Verfügung, beispielsweise beim Anlaufen des Vibrationsantriebs, was nicht nur den Betrieb wirtschaftlicher macht, sondern auch die Umwelt schont.

Die elektrische Bremse umfasst erfindungsgemäß einen Kondensator, der derart ausgebildet ist, dass er beim Bremsen ladbar und die gespeicherte Energie zum Anlaufen des Vibrationsantriebs nutzbar ist. Insbesondere beim Einschalten des Vibrationsantriebes werden größere Kräfte benötigt, um die Unwuchtmassen des Schwingungserregers aus dem Stillstand in Rotation zu versetzen. Hier werden daher regelmäßig Leistungsspitzen vom System abverlangt. Um während dieser Leistungsspitzen die notwendige Energie zur Verfügung zu stellen, kann der Kondensator eingesetzt werden, der beim Abschalten des Vibrationsantriebes durch die Nutzung des elektrischen Motors als Generator aufgeladen wird. Beim Anlaufen der Unwuchtmassen des Schwingungserregers wird die im Kondensator gespeicherte Energie dann zum Ausgleich der Leistungsspitze eingesetzt, sodass insgesamt ein gleichmäßiger Betrieb ermöglicht wird.

Erfindungsgemäß kann es sich bei dem wenigstens einen Elektromotor um einen Asynchronmotor oder Synchronmotor handeln. Synchronmotoren sind allerdings aufgrund ihrer kleineren Bauweise bevorzugt. Darüber hinaus sind wassergekühlte elektrische Motoren gegenüber luftgekühlten bevorzugt, da die wassergekühlten Elektromotoren bis zu drei Baugrößen kleiner sind als Luftgekühlte. Insgesamt ist es daher erfindungsgemäß vorgesehen, dass der wenigstens eine elektrische Motor, insbesondere sämtliche elektrischen Motoren, ein Synchronmotor oder ein Asynchronmotor ist und/oder eine Wasserkühlung aufweist.

Insbesondere wenn auf den Verbrennungsmotor und/oder das Hydrauliksystem verzichtet wird, werden an der Bodenverdichtungsmaschine herkömmlicherweise durch diese Komponenten genutzte Räume frei. Diese können vorteilhafterweise beispielsweise zur Unterbringung des elektrischen Energiespeichers zur Versorgung des oder der elektrischen Motoren mit elektrischer Energie genutzt werden. Beispielsweise wird durch den Verzicht auf den Verbrennungsmotor im Motorraum Platz frei, der zur Unterbringung eines elektrischen Energiespeichers genutzt werden kann. Um die mögliche ununterbrochene Arbeitszeit der Bodenverdichtungsmaschinen zu erhöhen, ist es bevorzugt, wenn die Bodenverdichtungsmaschine mehr als einen elektrischen Energiespeicher aufweist. Um den vorhandenen Bauraum an der Maschine optimal auszunutzen, können die mehreren elektrischen Energiespeicher beispielsweise auch unterschiedliche Größen haben und an verschiedenen Orten angeordnet sein. Auch kann eine Kombination von, insbesondere werkzeuglos, austauschbaren und fest installierten Energiespeichern vorgesehen sein. Gemäß einer bevorzugten Ausführungsform ist also vorgesehen, dass die Bodenverdichtungsmaschine wenigstens zwei elektrische Energiespeicher umfasst, die getrennt voneinander an unterschiedlichen Orten der Bodenverdichtungsmaschine angeordnet sind. Es kann beispielsweise eine Vielzahl von elektrischen Energiespeichern unterschiedlicher Größe vorgesehen sein, die überall da angeordnet sind, wo Bauraum zur Verfügung steht. Durch die unterschiedliche Größe der verwendeten elektrischen Energiespeicher können auch unterschiedlich große beziehungsweise kleine Freiräume optimal genutzt werden. Die Größe der elektrischen Energiespeicher bezieht sich dabei beispielsweise bei Akkumulatoren/Batterien sowohl auf die Größe als auch die Anzahl der Zellen (Sekundärzellen). So können beispielsweise ebenfalls einzelne Zellen als elektrischer Energiespeicher verbaut werden. Darüber hinaus können einzelne Zellen in unterschiedlichen Formen ausgebildet sein oder auch in unterschiedlichen Formen zu einem größeren elektrischen Energiespeicher zusammengefügt sein. So lassen sich die Formen der elektrischen Energiespeicher an die jeweiligen Gegebenheiten des zur Verfügung stehenden Bauraumes anpassen, der damit möglichst vollständig und optimal genutzt wird. Besonders bevorzugt umfasst die Bodenverdichtungsmaschine somit wenigstens zwei zueinander getrennte Energiespeicher bzw. wenigstens zwei separate Module, die zueinander unterschiedlich geformt sind und/oder eine zueinander unterschiedliche Speicherkapazität aufweisen. Diese wenigstens zwei zueinander getrennten Energiespeicher sind zudem bevorzugt an verschiedenen Stellen in der Bodenverdichtungsmaschine angeordnet, insbesondere zueinander körperlich kontaktfrei.

Im Betrieb der Bodenverdichtungsmaschinen treten üblicherweise starke Vibrationen und Erschütterungen auf. Zwar sind die Räder beziehungsweise Walzenbandagen vom Rest der Bodenverdichtungsmaschine üblicherweise schwingungsentkoppelt, dennoch übertragen sich die Vibrationen der Fahrwerke, insbesondere, wenn diese in Schwingungen versetzt werden, zumindest geringfügig auf den Rest der Bodenverdichtungsmaschine. Damit derartige Erschütterungen und Vibrationen die elektrischen Energiespeicher nicht beschädigen können, ist es bevorzugt, dass die elektrischen Energiespeicher erschütterungsresistent ausgebildet sind. Darüber hinaus ist bevorzugt, dass die elektrischen Energiespeicher erschütterungsresistent beziehungsweise schwingungsgedämpft an der Bodenverdichtungsmaschine angeordnet beziehungsweise gelagert sind. Beispielsweise können der oder die Energiespeicher über ein Dämpfungselement, beispielsweise einen Gummipuffer, an der Maschine befestigt sein. Insbesondere kann es vorgesehen sein, dass ein Lagerrahmen umfasst ist, der über Dämpfungselemente am Maschinenrahmen gelagert und gegenüber dem Maschinenrahmen durch die Dämpfungselemente schwingungsgedämpft ist. Dieser Lagerrahmen wird bevorzugt zur Aufnahme und Lagerung wenigstens eines Energiespeichers genutzt. Es ist bevorzugt, wenn sämtliche Energiespeicher der Bodenverdichtungsmaschine über wenigstens einen solchen Lagerrahmen am Maschinenrahmen schwingungsgedämpft gelagert werden.

Insbesondere in den Walzenbandagen der Bodenverdichtungsmaschine ist üblicherweise ein Großteil des verfügbaren Raumes ungenutzt. Es ist daher gemäß einer bevorzugten Ausführungsform vorgesehen, dass wenigstens ein elektrischer Energiespeicher in einem Rad oder einer Walzenbandage angeordnet ist. "In einer Walzenbandage" bedeutet vorzugsweise, dass sich der elektrische Energiespeicher im Innenraum der Walzenbandage befindet, beispielsweise zwischen den beiden die Walzenbandage entlang ihrer Längsrichtung nach außen abschließenden Tellerscheiben. Gerade bei erschütterungsresistenten Energiespeichern ist eine derartige Anordnung kein Problem, auch wenn die entsprechende Walzenbandage von einem Vibrationserreger in Schwingungen versetzt wird. Weist die Bodenverdichtungsmaschine zwei Walzenbandagen auf, so ist es ebenfalls bevorzugt, dass in beiden Walzenbandagen jeweils ein elektrischer Energiespeicher angeordnet ist.

Eine besondere Risikostelle für Beschädigungen, insbesondere durch Vibrationen, stellen Lötverbindungen dar. Lötverbindungen sind notwendig, um elektrische Kontakte zwischen verschiedenen Bauteilen herzustellen, insbesondere zwischen einzelnen Zellen der elektrischen Energiespeicher oder den elektrischen Energiespeichern und elektrischen Leitungen, beispielsweise zu den elektrischen Motoren. Es kann daher vorgesehen sein, dass Lötverbindungen elektrischer Kontakte, insbesondere zur Kontaktierung der elektrischen Energiespeicher oder deren Zellen untereinander, ein elastisches Lot umfassen. Ein derartiges elastisches beziehungsweise flexibles Lot zeichnet sich dadurch aus, dass es durch seine Elastizität auch starke und andauernde Vibrationen zerstörungsfrei überdauern kann. Flexible Lote sind daher deutlich besser zum Einsatz an Bodenverdichtungsmaschinen mit Vibrationsantrieben geeignet als herkömmliche Lote, die die typischen Beanspruchungen im Arbeitsvorgang von Bodenverdichtungsmaschinen nur kurzzeitig aushalten und relativ schnell verschleißen beziehungsweise aufbrechen. Durch die Verwendung eines flexiblen beziehungsweise elastischen Lotes wird die Lebensdauer von Lötverbindungen deutlich erhöht und die spezielle Anwendung bei Bodenverdichtungsmaschinen mit Vibrationsantrieb verbessert. Ergänzend oder alternativ kann vorgesehen sein, dass die einzelnen Zellen eines elektrischen Energiespeichers mittels elastischer Kontaktierungselemente mit einer Leiterplatte verbunden sind, die die elektrische Verbindung der Zellen realisiert. Solche elastischen Kontaktierungselemente können insbesondere eine Zusammensetzung aus wenigstens einem elastischen Polymer und Partikeln aus einem stromleitenden Material aufweisen. Die verbundenen Zellen bilden dann den elektrischen Energiespeicher. Hierzu kann optional ebenfalls ein flexibles Lot eingesetzt werden, welches dann als elastisches Kontaktierungselement dient. Diese Technologie wird beispielsweise im CONCHIFERA-System der Invenox GmbH aus Garching, Deutschland, eingesetzt. Die Erfindung erstreckt sich ebenfalls auf die Verwendung derartiger elektrischer Energiespeicher, insbesondere nach dem CONCHIFERA-System, in einer Bodenverdichtungsmaschine.

Darüber hinaus sieht die vorliegende Erfindung verschiedene Ausführungen zum Laden der elektrischen Energiespeicher vor. Wie schon angeführt kann dafür beispielsweise ein Verbrennungsmotor eingesetzt werden, der einen Generator antreibt. Bevorzugt ist es allerdings, wenn auf den Verbrennungsmotor komplett verzichtet wird. Es kann daher vorgesehen sein, dass Solarzellen zum Laden des elektrischen Energiespeichers eingesetzt werden. Hierzu kann beispielsweise eine Einheit mobiler Solarpaneele vorgesehen sein, die getrennt von der Bodenverdichtungsmaschine an der Baustelle aufgestellt werden, und die als Ladestation für die Bodenverdichtungsmaschine und insbesondere die elektrischen Energiespeicher dienen. Darüber hinaus können ebenfalls Solarzellen auf der Bodenverdichtungsmaschine selbst angeordnet sein, insbesondere auf der äußeren Oberfläche der Bodenverdichtungsmaschine, wie dem Dach des Fahrerstandes und/oder auf der Haube beziehungsweise Motorhaube. Gemäß dieser bevorzugten Ausführungsform ist also vorgesehen, dass Solarzellen vorhanden sind, insbesondere auf dem Dach eines Fahrerstandes und/oder auf einer Haube der Bodenverdichtungsmaschine, die dazu ausgebildet sind, die wenigstens zwei elektrischen Energiespeicher aufzuladen. Die Solarzellen auf der Bodenverdichtungsmaschine selbst können während des gesamten Arbeitsbetriebes, solange dieser bei Tageslicht stattfindet, dazu genutzt werden, die elektrischen Energiespeicher aufzuladen und damit die maximale Arbeitsdauer der Bodenverdichtungsmaschine, bevor ein separater Ladevorgang oder ein Austausch der elektrischen Energiespeicher stattfinden muss, zu verlängern.

Sowohl zusätzlich als auch als Alternative kann vorgesehen sein, dass ein Anschluss vorhanden ist, der derart ausgebildet ist, dass eine externe Stromquelle an die Bodenverdichtungsmaschine anschließbar ist. Die Bodenverdichtungsmaschine an sich umfasst also den Anschluss, der beispielsweise in Form einer Steckdose oder eines Ladekabels ausgebildet sein kann. Der Anschluss ist derart ausgebildet, dass die Bodenverdichtungsmaschine beispielsweise mit einem mit dem allgemeinen Stromnetz verbundenen Stromkabel kontaktierbar ist. Beispielsweise kann die Bodenverdichtungsmaschine über ein Stromkabel geladen oder sogar direkt über das Stromkabel betreibbar sein. Dies ist insbesondere von Vorteil, wenn beispielsweise im Inneren eines Gebäudes Boden verdichtet wird, beispielsweise in einer Halle. In dieser Umgebung sind typischerweise Stromkabel verfügbar, die für den gesamten Arbeitsprozess eingesetzt werden können. Darüber hinaus ist es bevorzugt, wenn eine Ladestation vorhanden ist, die mit dem Anschluss an der Bodenverdichtungsmaschine elektrisch kontaktierbar ist. Die Ladestation kann beispielsweise mit dem allgemeinen Stromnetz verbunden sein oder beispielsweise einen Generator, der von einem Verbrennungsmotor getrieben wird, umfassen. Der Anschluss der Bodenverdichtungsmaschine und die Ladestation sind derart ausgebildet, dass sie einfach und mit wenigen Handgriffen kontaktierbar sind, so dass die Bodenverdichtungsmaschine oder zumindest einer der elektrischen Energiespeicher von der Ladestation mit elektrischer Energie geladen werden kann.

Ergänzend oder alternativ kann ebenfalls eine, insbesondere mobile, Energiequelle, beispielsweise eine Brennstoffzelle, vorhanden sein, die zum Laden der wenigstens zwei elektrischen Energiespeicher ausgebildet ist. Die Ladung der elektrischen Energiespeicher erfolgt daher aus der im Wasserstoff gespeicherten Energie über eine Wasserstoff-Brennstoffzelle und ist daher zum einen sehr effizient und zum anderen besonders umweltfreundlich. Insbesondere ist eine mobile Ladestation vorgesehen, die die Brennstoffzelle und einen Wasserstofftank umfasst, und die entweder mit wenigstens einem der elektrischen Energiespeicher oder der Bodenverdichtungsmaschine an sich kontaktierbar ist, um diese zu laden. Die mobile Ladestation mit der Brennstoffzelle kann beispielsweise ebenfalls ein Fahrwerk zum leichteren Transport und einen Schutzaufbau zum Schutz der Brennstoffzelle und/oder des Wasserstofftanks vor Witterungseinflüssen und/oder Vandalismus umfassen. Neben der mobilen Ladestation mit einer Brennstoffzelle können aber auch andere Energiequellen in der Ladestation vorgesehen sein. Denkbar sind beispielsweise Energiequellen mit Flüssiggas, Methan oder anderen fossilen oder synthetischen Kraftstoffen. Darüber hinaus kann die Ladestation Solarzellen oder einen Generator, der beispielsweise einen Verbrennungsmotor umfasst oder wind- oder wassergetrieben ausgebildet ist, umfassen. Eine solche Lösung bringt den großen Vorteil mit sich, dass sie sowohl für den Ladebetrieb als auch für den Arbeitsbetrieb durchgehend emissionsfrei, zumindest CO₂-frei, ist.

Das vorstehend dargelegte Konzept eignet sich ganz besonders für sogenannte leichte Tandemwalzen, insbesondere leichte Aufsitztandemwalzen. Derartige Walzen zeichnen sich zunächst dadurch aus, dass sie ein Gesamtgewicht von kleiner 5t aufweisen. Gleichzeitig weisen solche Walzen bevorzugt einen Vorderrahmen und einen Hinterrahmen auf, die über ein Knickgelenk miteinander lenkbar verbunden sind. Auf dem Hinterwagen ist bevorzugt ein Fahrstand angeordnet. Auf dem Vorderwagen ist dagegen bevorzugt der wenigstens eine elektrische Energiespeicher positioniert, idealerweise verborgen unter einer aufschwenkbaren Motorhaube, um einen leichten Zugriff und gleichzeitig ein ästhetisches Design zusammen mit einem mechanischen Schutz zu ermöglichen. Derartige Tandemwalzen weisen wenigstens eine Bandage, typischerweise am Vorderwagen, und am Hinterwagen wenigstens eine weitere Bandage oder einen Gummiradsatz, typischerweise umfassend drei oder mehr koaxial zueinander angeordnete Gummiräder, auf. Über das den Vorderwagen mit dem Hinterwagen verbindende Knickgelenk hinweg ist erfindungsgemäß bevorzugt eine elektrische Energie leitende Übertragungsverbindung vorgesehen.

Insbesondere für solche leichten Tandemwalzen ist es bevorzugt, wenn der wenigstens eine elektrische Energiespeicher wenigstens teilweise in einem Bereich unterhalb der maximalen vertikalen Höhe der wenigstens einen Bandage, insbesondere beider Bandagen, angeordnet ist. Dies ist dadurch möglich, dass der wenigstens eine elektrische Energiespeicher, insbesondere bei einem vielzelligen Aufbau, in vergleichsweise komplexe dreidimensionale Formen bringbar ist und somit insbesondere an bisher nur sehr wenig bei solchen Maschinen genutzte Bauräume angepasst werden kann. Es hat sich nun gezeigt, dass insbesondere der Bauraum unterhalb der maximalen vertikalen Höhe der wenigstens einen Bandage für die Nutzung eines elektrischen Energiespeichers zur Unterbringung dieses Energiespeichers zugänglich wird. Dadurch verbessert sich gleichzeitig der Maschinenschwerpunkt, da dieser Bauraum vergleichsweise tief liegt. Dieser Bauraum kann sowohl am Vorderwagen als auch am Hinterrahmen oder an beiden Rahmenelementen zur Unterbringung eines oder mehrerer elektrischer Energiespeicher genutzt werden. Auch wenn der wenigstens eine elektrische Energiespeicher in diesem Bereich fest verbaut sein kann, ist es ideal, wenn ergänzend wenigstens eine Zugangsöffnung vorhanden ist, über die der wenigstens eine Energiespeicher auch in diesem Rahmenbereich von außen aus zugänglich und austauschbar ist.

Insbesondere für leichte, knickgelenkte Tandemwalzen ist es ferner bevorzugt, wenn bei am Hinterwagen montiertem Fahrstand der Bereich unterhalb der Fußbereiches des auf dem Fahrstand in einem Sitz sitzenden Fahrers genutzt wird. Auch dieser Bereich zeichnet sich einerseits durch eine vergleichsweise tiefe Lage aus. Andererseits ist der potentiell verfügbare Bauraum in diesem Bereich vergleichsweise groß und leicht zugänglich, so dass ein elektrischer Energiespeicher mit vergleichsweise hoher Speicherkapazität in diesem Bereich sehr effektiv positioniert werden kann. Es ist weiter bevorzugt, wenn in diesem Bereich auch gleichzeitig ein Bauraumabschnitt genutzt wird, der unterhalb der maximalen vertikalen Höhe der Bandage (oder des Gummiradsatzes) am Hinterwagen liegt. Weiter bevorzugt ist es, wenn im Fußbodenblech des Fahrstandes eine Zutrittsklappe vorhanden ist, die den Zugriff auf den unterhalb dieses Fußbodenbleches verbauten elektrischen Energiespeichers ermöglicht.

Die Lösung der eingangs genannten Aufgabe gelingt ebenfalls mit einem Verfahren zum Betrieb einer Bodenverdichtungsmaschine wie vorstehend beschrieben. Sämtliche Merkmale, Vorteile und Wirkungen der erfindungsgemäßen Bodenverdichtungsmaschine gelten im übertragenen Sinne ebenfalls für das erfindungsgemäße Verfahren, sodass lediglich zur Vermeidung von Wiederholungen auf die Ausführungen zur Bodenverdichtungsmaschine Bezug genommen wird. Das erfindungsgemäße Verfahren umfasst den Schritt: Antreiben, insbesondere ausschließliches Antreiben, wenigstens eines Fahrwerks und/oder der Lenkung und/oder eines Vibrationsantriebs der Bodenverdichtungsmaschine über einen elektrischen Motor, wobei der elektrische Motor (11) ein Asynchronmotor oder ein Synchronmotor ist und/oder eine Wasserkühlung aufweist. Wie bereits zur Bodenverdichtungsmaschine beschrieben, kann dieses Antreiben über den elektrischen Motor beispielsweise derart erfolgen, dass der elektrische Motor eine Hydraulikpumpe antreibt, die wiederum einen Hydraulikmotor des Fahrantriebs oder des Lenkantriebs treibt. Bevorzugt ist es allerdings, dass der elektrische Motor direkt die Bewegung des Fahrwerks oder der Lenkung hervorruft, so dass auf ein Hydrauliksystem verzichtet wird.

Auch für das Verfahren ist es bevorzugt, wenn ein ausschließliches Antreiben der gesamten Bodenverdichtungsmaschine über elektrische Motoren erfolgt, sprich, wenn die Bodenverdichtungsmaschine sowohl verbrennungsmotorfrei als auch hydraulikfrei beziehungsweise hydrauliksystemfrei betrieben wird. Wie schon erwähnt umfassen bevorzugte Ausführungsformen des Verfahrens sämtliche Ausführungsformen der Bodenverdichtungsmaschine und insbesondere das Erregen einer Vibration in einem Rad oder einer Walzenbandage über einen, insbesondere in dem Rad oder in der Walzenbandage angeordneten, elektrischen Motor; und/oder das Betreiben eines elektrischen Motors in einem Rad oder einer Walzenbandage durch einen ebenfalls in dem Rad oder in der Walzenbandage angeordneten elektrischen Energiespeicher; und/oder das Bremsen eines Vibrationsantriebs in einem Rad oder einer Walzenbandage über einen elektrischen Motor, insbesondere unter Rückgewinnung von elektrischer Energie beim Bremsen; und/oder das Aufladen wenigstens eines elektrischen Energiespeichers über Rückgewinnung von elektrischer Energie beim Bremsen und/oder Solarzellen und/oder eine Brennstoffzelle und/oder eine externe Stromquelle. Auch das erfindungsgemäße Verfahren führt zu einem effizienteren und saubereren Betrieb der Bodenverdichtungsmaschine.

Die Erfindung wird nachstehend anhand der in den Figuren gezeigten Ausführungsbeispiele näher erläutert. Es zeigen schematisch:
Figur 1: eine als Tandemwalze ausgebildete Bodenverdichtungsmaschine;
Figur 2: eine als Walzenzug ausgebildete Bodenverdichtungsmaschine;
Figur 3: eine als Gummiradwalze ausgebildete Bodenverdichtungsmaschine;
Figur 4: eine als Grabenwalze ausgebildete Bodenverdichtungsmaschine;
Figur 5: ein Ablaufdiagramm des Verfahrens; und
Figur 6: eine als leichte Tandemwalze ausgebildete Bodenverdichtungsmaschine.

Gleiche oder gleichwirkende Bauteile sind in den Figuren mit den gleichen Bezugsziffern bezeichnet. Sich wiederholende Bauteile sind nicht in jeder Figur gesondert bezeichnet.

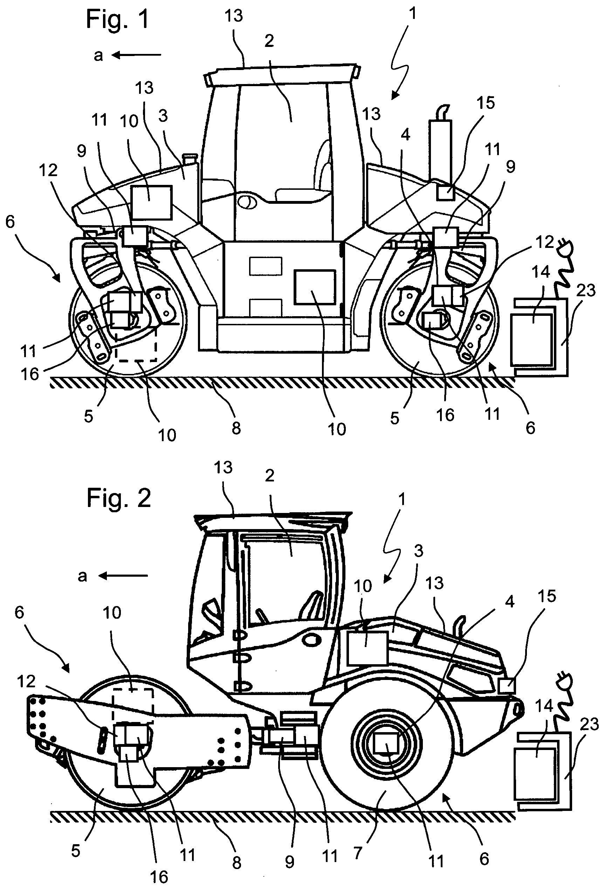

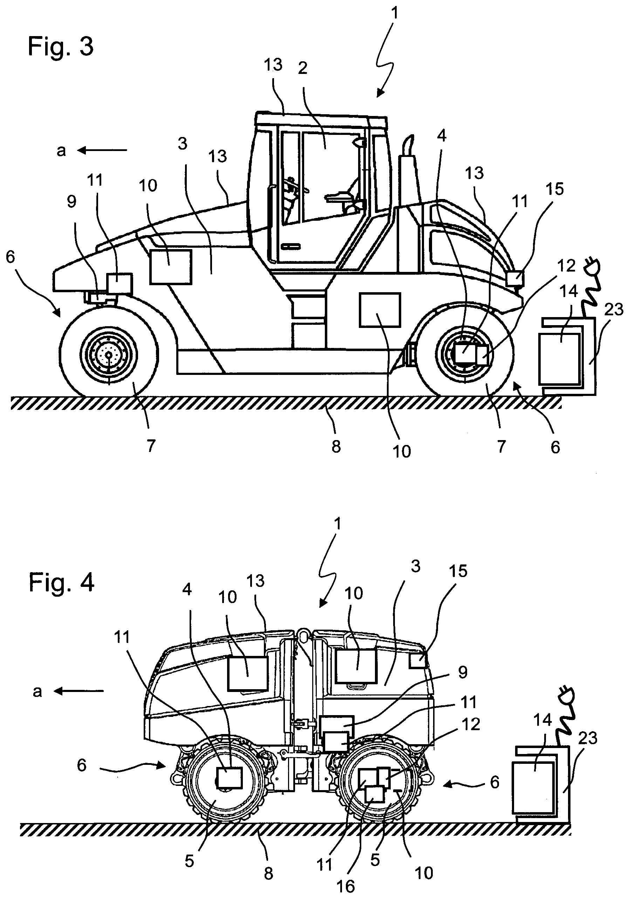

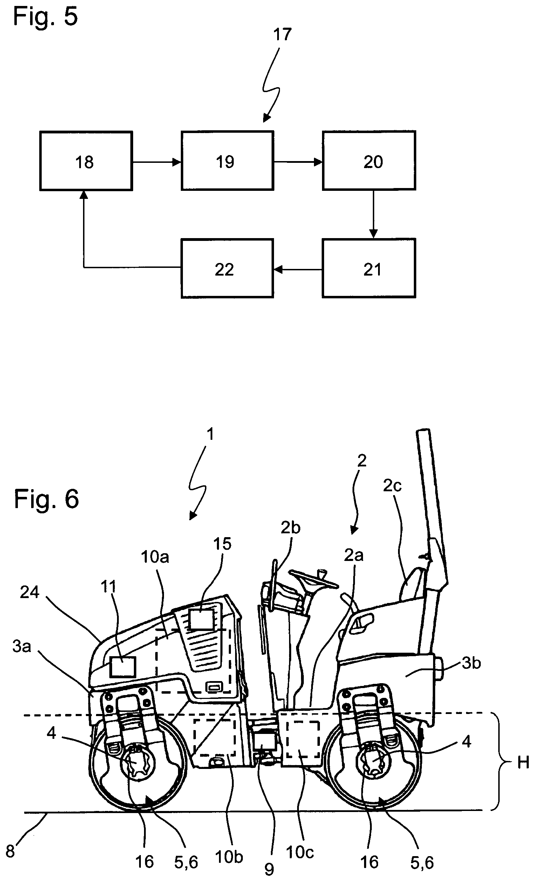

Die Figuren 1-4 und 6 zeigen erfindungsgemäße Bodenverdichtungsmaschinen 1, wobei die Figur 1 eine Tandemwalze, Figur 2 einen Walzenzug, Figur 3 eine Gummiradwalze, Figur 4 eine Grabenwalze und Figur 6 eine leichte Tandemwalze veranschaulicht. Auch wenn in den Figuren teilweise beispielsweise Abgasanlagen beziehungsweise Auspuffe zu sehen sind, so veranschaulichen diese Figuren schematisch selbstverständlich dennoch ebenfalls die Ausführungsformen, in denen auf Verbrennungsmotoren verzichtet wird. Die Bodenverdichtungsmaschinen 1 umfassen einen Maschinenrahmen 3 und Fahrwerke 6, die teilweise als Walzenbandagen 5 oder Räder 7 ausgebildet sind. Mit den Fahrwerken 6 bewegen sich die Bodenverdichtungsmaschinen 1 im Arbeitsbetrieb in Arbeitsrichtung a über einen Boden 8, der verdichtet werden soll. Die Arbeitsrichtung a ist dabei vorliegend als Vorwärtsrichtung gewählt, selbstverständlich können allerdings die Bodenverdichtungsmaschinen 1 auch rückwärts, also entgegen der Arbeitsrichtung a, den Boden 8 verdichten. Die Bodenverdichtungsmaschinen 1 der Figuren 1-3 weisen ebenfalls einen Fahrerstand 2 auf, in dem sich ein Bediener zur Steuerung der Bodenverdichtungsmaschine 1 aufhalten kann. Die Grabenwalze der Figur 4 dagegen weist keinen Fahrerstand 2 auf, da es sich hierbei um ein ferngesteuertes Gerät handelt.

Zum Antrieb der Fahrwerke 6 und damit für die Fortbewegung der Bodenverdichtungsmaschinen 1 sind an den Laufwerken 6 Fahrantriebe 4 vorgesehen. Beispielsweise kann an jedem Laufwerk 6 ein für dieses Laufwerk 6 vorgesehener Fahrantrieb 4 vorgesehen sein. Darüber hinaus sind an den lenkbaren Laufwerken 6 der Tandemwalze gemäß Figur 1 und der Gummiradwalze gemäß Figur 3 jeweils Lenkantriebe 9 vorgesehen, die entsprechend den Steuerbefehlen eines Bedieners eine Lenkbewegung der Laufwerke 6 antreiben. Der Walzenzug gemäß Figur 2 und die Grabenwalze gemäß Figur 4 weisen dagegen ein Knickgelenk auf, über welches die Lenkung der Bodenverdichtungsmaschine 1 erfolgt. In diesen Maschinen sitzt der Lenkantrieb 9 am Knickgelenk und treibt eine Verschwenkung des vorderen und des hinteren Maschinenteils und insbesondere der Fahrwerke 6 zur Lenkung der Bodenverdichtungsmaschine 1. Darüber hinaus sind typischerweise in den Walzenbandagen 5 der Bodenverdichtungsmaschinen 1 Vibrationsantriebe 16 vorgesehen, die dazu ausgebildet sind, Schwingungserreger in Rotation zu versetzen, die eine Vibration der Walzenbandagen 5 anregen, wodurch die Verdichtung des Bodens 8 verbessert wird.

Üblicherweise handelt es sich sowohl beim Fahrantrieb 4 als auch beim Lenkantrieb 9 und beim Vibrationsantrieb 16 um hydraulische Antriebe, beispielsweise Hydraulikmotoren, die von einer an anderer Stelle der Bodenverdichtungsmaschine 1 angeordneten Hydraulikpumpe betrieben werden. Gemäß einer ersten Ausführungsform der Erfindung ist nun vorgesehen, dass diese Hydraulikpumpen von wenigstens einem elektrischen Motor 11 angetrieben werden. Dieser wenigstens eine elektrische Motor 11 wird beispielsweise von einem Verbrennungsmotor, insbesondere einem Dieselverbrennungsmotor, über einen Generator mit elektrischer Energie versorgt. Gemäß einer bevorzugten Ausführungsform ist zwischen dem Generator und dem wenigstens einen elektrischen Motor 11 noch ein elektrischer Energiespeicher 10 zwischengeschaltet, der vom Generator aufgeladen wird und der den elektrischen Motor 11 mit elektrischer Energie versorgt. Bei dieser Ausführungsform kann der Verbrennungsmotor immer am selben, möglichst optimalen Leistungspunkt betrieben werden und konstant über den Generator den elektrischen Energiespeicher 10 laden. Leistungsspitzen, die am elektrischen Motor 11 abgerufen werden, werden über die im elektrischen Energiespeicher gespeicherte Energie ausgeglichen, sodass die Drehzahl des Verbrennungsmotors über den gesamten Arbeitsbetrieb nicht verändert werden muss. Hierdurch lässt sich die Wirtschaftlichkeit des Betriebes des Verbrennungsmotors deutlich verbessern.

Eine alternative Ausführungsform der Erfindung sieht vor, dass die Bodenverdichtungsmaschine 1 keinen Verbrennungsmotor aufweist, also verbrennungsmotorfrei ausgebildet ist. Zum Betrieb des wenigstens einen elektrischen Motors 11 ist wenigstens ein, insbesondere mehrere elektrische Energiespeicher 10 vorgesehen, die beispielsweise als wiederaufladbare Akkumulatoren oder Batterien ausgebildet sind.

Eine weitere Ausführungsform der Erfindung sieht vor, dass die Bodenverdichtungsmaschine 1 kein Hydrauliksystem mehr aufweist, also hydraulikfrei beziehungsweise hydrauliksystemfrei betrieben wird. In diesem Fall umfassen der beziehungsweise die Fahrantriebe 4, der beziehungsweise die Lenkantriebe 9 und der beziehungsweise die Vibrationsantriebe 16 jeweils einen elektrischen Motor 11, der die Funktion der jeweiligen Antriebe ausführt. Der elektrische Motor 11 ersetzt also in diesem Fall den herkömmlichen Hydraulikmotor des Hydrauliksystems. Der elektrische Motor 11 treibt daher direkt beispielsweise die Rotation der Laufwerke 6, die Lenkbewegung des Lenkantriebs 9 und den Schwingungserreger des Vibrationsantriebes 16 an. In einer ersten Variante dieser Ausführungsform ist dennoch weiterhin ein Verbrennungsmotor vorhanden, der die elektrische Energie für den oder die elektrischen Motoren 11 über einen Generator unter Zwischenschaltung eines elektrischen Energiespeichers 10 zur Verfügung stellt. In einer zweiten und bevorzugten Variante dieser Ausführungsform jedoch ist die Bodenverdichtungsmaschine 1 sowohl hydraulikfrei als auch verbrennungsmotorfrei ausgebildet. Sie weist also weder einen Verbrennungsmotor noch ein Hydrauliksystem auf. Sämtliche Funktionen der Bodenverdichtungsmaschine 1 werden von dem wenigsten einen elektrischen Motor 11 und insbesondere mehreren elektrischen Motoren 11 ausgeführt. Auf diese Weise wird die Teilevielfalt der Bodenverdichtungsmaschine 1 erheblich reduziert, was die Herstellung und die Wartung vereinfacht. Durch den Verzicht auf einen Verbrennungsmotor und auch durch den Verzicht auf das Hydrauliksystem wird erheblicher Bauraum frei, der zur Anordnung von elektrischen Energiespeichern 10 genutzt werden kann.

Dabei ist es besonders vorteilhaft, wenn sämtlicher zur Verfügung stehender Bauraum auf der Bodenverdichtungsmaschine 1 zur Anordnung von elektrischen Energiespeichern 10 genutzt wird. So ist es beispielsweise vorgesehen, dass mehrere elektrische Energiespeicher 10 unterschiedlicher Form und unterschiedlicher Größe an unterschiedlichen Orten an der Bodendichtungsmaschine 1 angeordnet sind, beispielsweise im herkömmlicherweise als Motorraum genutzten Stauraum und/oder ebenfalls beispielsweise im Innenraum der Walzenbandage 5. Durch die Verwendung von elektrischen Energiespeichern 10 in unterschiedlichen Formen kann die Form des elektrischen Energiespeichers 10 an den jeweiligen Montageort angepasst werden. Auch verwinkelte, flächige oder kleine Freiräume können dadurch optimal ausgenutzt werden. Hierzu werden beispielsweise einzelne Zellen der Akkumulatoren unterschiedlich zueinander angeordnet und miteinander verlötet. Um die Erschütterungsresistenz der elektrischen Energiespeicher 10 zu erhöhen, wird hierbei ein flexibles beziehungsweise elastisches Lot verwendet und/oder zur stromleitenden Anbindung einzelner Akkuzellen auf stromleitende elastische Verbindungselemente zurückgegriffen, die beispielsweise ein elastisches Polymer und darin dispergierte stromleitende Partikel aufweisen.

Der Vibrationsantrieb 16 treibt typischerweise einen Schwingungserreger an, der rotierende Unwuchten umfasst, die durch ihre Rotation eine Vibration in der Walzenbandage 5 anregen. Beim Abschalten des Vibrationsantriebes 16 laufen die Unwuchten aufgrund ihrer Trägheit typischerweise längere Zeit nach. Insbesondere hier ist es daher vorteilhaft, eine elektrische Bremse 12 vorzusehen, die zum einen die Nachlaufzeit des Vibrationsantriebes 16 verringert, also den Vibrationsantrieb 16 beziehungsweise die Unwuchten abbremst, sobald der Vibrationsbetrieb abgeschaltet wurde, und zum anderen elektrische Energie aus der nachlaufenden Rotation der Unwuchten zurückgewinnt. Die elektrische Bremse 12 wird dabei beispielsweise so umgesetzt, dass der elektrische Motor 11, der zum Antrieb des Vibrationsantriebes 16 genutzt wird, ebenfalls als Generator wirkt, der aus der Rotation der Unwuchten elektrische Energie gewinnt und diese in den elektrischen Energiespeicher 10 einleitet. Auf diese Weise kommt der Schwingungserreger schneller zum Stehen und der Betrieb wird durch die rückgewonnene elektrische Energie insgesamt wirtschaftlicher gestaltet.

Zur weiteren Energiegewinnung sind bevorzugt auf der Bodenverdichtungsmaschine 1 Solarzellen 13 in Form von Solarpaneelen vorgesehen. Diese befinden sich beispielsweise auf dem Dach des Fahrerstandes 2 oder an anderen Stellen der Außenverkleidung der Bodenverdichtungsmaschine 1, beispielsweise auf einer oder mehreren Hauben. Über die Solarzellen 13 können die elektrischen Energiespeicher 10 während des gesamten Arbeitsbetriebes der Bodenverdichtungsmaschine 1 geladen werden, selbstverständlich vorausgesetzt, dass bei Tageslicht gearbeitet wird.

Darüber hinaus ist an der Bodenverdichtungsmaschine 1 bevorzugt ein Anschluss 15 für eine externe Stromquelle vorgesehen. Der Anschluss 15 an der Bodenverdichtungsmaschine 1 kann beispielsweise in Form einer Steckdose oder eines Ladekabels ausgebildet sein. Über eine komplementär ausgebildete Steckdose oder ein komplementär ausgebildetes Ladekabel kann die Bodenverdichtungsmaschine 1 über den Anschluss 15 beispielsweise mit dem allgemeinen Stromnetz verbunden werden, über das sodann die elektrischen Energiespeicher 10 geladen werden können. Alternativ ist es beispielsweise ebenfalls möglich, die Bodenverdichtungsmaschine 1 über den Anschluss 15 mit einer Energiequelle, beispielsweise einer Brennstoffzelle 14, zu verbinden und über diese zu laden. In den gezeigten Ausführungsbeispielen der Figuren 1-4 ist die Brennstoffzelle 14 zusammen mit ihrem Wasserstofftank als Teil einer Ladestation 23 ausgebildet, wobei die Ladestation auch andere Energiequellen umfassen kann. Die Ladestation 23 weist zum einen eine Aufnahme für die Brennstoffzelle 14 und deren Wasserstofftank auf, so dass insbesondere der Wasserstofftank von Umwelteinflüssen abgeschirmt ist. Darüber hinaus weist die Ladestation eine komplementäre Einrichtung zum Anschluss 15 der Bodenverdichtungsmaschine 1 auf, sodass die Ladestation 23 derart mit der Bodenverdichtungsmaschine 1 elektrisch kontaktiert werden kann, dass die Brennstoffzelle 14 die elektrischen Energiespeicher 10 der Bodenverdichtungsmaschine 1 lädt. Die Ladestation 23 ist insbesondere als mobile Ladestation ausgebildet und kann von einem Bediener beispielsweise per Hand bewegt werden. Hierfür weist die Ladestation 23 beispielsweise ebenfalls Räder auf.

Figur 5 zeigt das Ablaufdiagramm des Verfahrens 17. Das Verfahren 17 beginnt mit dem antreiben 18 wenigstens eines Fahrwerks 6 und/oder der Lenkung und/oder eines Vibrationsantriebs 16 der Bodenverdichtungsmaschine 1 über einen elektrischen Motor 11. Insbesondere erfolgt das Antreiben 18 der gesamten Bodenverdichtungsmaschine 1 über elektrische Motoren 11. Dies bedeutet, dass die Bodenverdichtungsmaschine 1 verbrennungsmotorfrei und ebenfalls hydraulikfrei beziehungsweise hydrauliksystemfrei ausgebildet ist. Es folgt das Erregen 19 einer Vibration in einem Rad 7 oder einer Walzenbandage 5 über einen elektrischen Motor 11. Der elektrische Motor 11 ist insbesondere im Inneren des Rades 7 oder der Walzenbandage 5 angeordnet. Das Betreiben 20 dieses elektrischen Motors 11 erfolgt insbesondere ebenfalls durch einen im Rad 7 oder in der Walzenbandage 5 angeordneten elektrischen Energiespeicher 10. Auch das Bremsen 21 eines Vibrationsantriebs 16 im Rad 7 oder in der Walzenbandage 5 erfolgt über einen elektrischen Motor 11, insbesondere unter Rückgewinnung von elektrischer Energie beim Bremsen 21. Während des Arbeitsbetriebes oder auch zwischen Arbeitsgängen erfolgt das Aufladen 22 wenigstens eines elektrischen Energiespeichers 10 über die Rückgewinnung von elektrischer Energie beim Bremsen und/oder über Solarzellen 13 und/oder über eine Brennstoffzelle 14 und/oder eine weitere externe Stromquelle. Darüber hinaus können auch austauschbare elektrische Energiespeicher 10 eingesetzt werden, beispielsweise sogenannte Kofferakkus. Diese können in einer externen Ladestation 23 geladen werden, während die Bodenverdichtungsmaschine 1 mit ausgetauschten elektrischen Energiespeichern 10 weiterarbeitet. Auf diese Weise werden Stillstandzeiten zum Laden der elektrischen Energiespeicher 10 vermieden. Alles in allem ermöglicht die Erfindung daher einen wirtschaftlichen Betrieb der Bodenverdichtungsmaschinen 1, der auch den modernen Anforderungen an Schadstoff- und Geräuschemissionen gerecht wird, sowie die Verwendung fossiler Brennstoffe entweder verringert oder sogar komplett vermeidet.

Figur 6 zeigt eine als leichte Tandemwalze ausgebildete Bodenverdichtungsvorrichtung 1. Diese Klasse an Bodenverdichtungsmaschinen zeichnet sich durch ein Gesamtgewicht von kleiner 5t aus und eignet sich zur Anwendung des vorstehend beschriebenen Konzeptes besonders gut. Grundsätzlich wird auf die vorhergehenden Ausführungen zur Bodenverdichtungsmaschine 1 Bezug genommen. Wesentlich ist für die leichte Tandemwalze nun insbesondere der Aufbau aus einem Vorderrahmen 3a und einem Hinterrahmen 3b, die über ein Knickgelenk in an sich bekannter Weise miteinander verbunden sind. Am Hinterwagen 3b ist der Fahrstand 2, umfassend einen Fahrstandboden 2a, eine Lenksäule 2b und einen Fahrersitz 2c, angeordnet. Der Fahrstandboden 2a liegt ungefähr auf Höhe der maximalen vertikalen Erstreckung H ("oberer Scheitelpunkt") der beiden Bandagen 6 bzw. auf Höhe des höchsten Punktes einer der beiden Bandagen 6, ermittelt vom Bodenuntergrund 8 in Vertikalrichtung bis zum oberen Scheitelpunkt der auf dem Bodenuntergrund aufstehenden Bandage 6. Herauszuheben ist nun, dass der Bauraum innerhalb des Maschinenrahmens 3 im Vorderwagen 3a und/oder im Hinterwagen 3b, der unterhalb einer virtuellen horizontalen Grenzlinie, die durch die maximale vertikale Erstreckung H bzw. den oberen Scheitelpunkt wenigstens einer der beiden Bandagen 6 verläuft, zur wenigstens teilweisen und insbesondere zur wenigstens vollständigen Aufnahme eines elektrischen Energiespeichers 10 (konkret die elektrischen Energiespeicher 10b im Vorderwagen und 10c im Hinterwagen) genutzt werden kann. Die Besonderheit der elektrischen Energiespeichers 10c liegt darin, dass er am Hinterwagen, insbesondere unmittelbar, unterhalb des Fahrstandbodens 2a angeordnet ist. Der Energiespeicher 10b ist dagegen im Vorderwagen positioniert. Der Energiespeicher 10b und/oder der Energiespeicher 10c ist/sind bevorzugt in dem jeweiligen Bereich des Vorderwagens und/oder des Hinterwagens angeordnet, der in Fahrtrichtung zwischen den beiden Bandagen und unterhalb der maximalen vertikalen Erstreckung einer der beiden Bandagen 6 liegt.

Die Tandemwalze umfasst ferner eine Motorhaube 24 am Vorderwagen. Diese ist von der in Fig. 6 gezeigten geschlossenen Stellung in einer geöffnete Stellung aufschwenkbar. Unter der Motorhaube 24 ist ein im Wesentlichen oberhalb der vorstehend beschriebenen virtuellen Horizontalen angeordneter elektrischer Energiespeicher 10a ergänzend oder alternativ zu den beiden Energiespeichern 10b und 10c angeordnet. Dieser ist von seiner Kapazität im Vergleich zu den beiden Energiespeichern 10b und/oder 10c bevorzugt größer ausgebildet, kann aber auch mehrere, unabhängig voneinander austauschbare Untereinheiten umfassen. Über die Motorhaube 24 gelingt hier ein optimaler Zugriff.

## Patentansprüche

1. Bodenverdichtungsmaschine (1) zur Verdichtung eines Bodens (8), insbesondere Tandemwalze, Walzenzug, Gummiradwalze oder Grabenwalze, umfassend
- einen Maschinenrahmen (3),
- wenigstens ein Fahrwerk (6) mit einem Rad (7) oder einer Walzenbandage (5),
- einem Fahrantrieb (4) zum Antrieb des Fahrwerks (6), und
- einem Lenkantrieb (9) zur Anpassung der Fahrtrichtung der Bodenverdichtungsmaschine (1),
- wenigstens einen elektrischen Motor (11),
wobei der wenigstens eine elektrische Motor (11) ein Asynchronmotor oder ein Synchronmotor ist und/oder eine Wasserkühlung aufweist, und wobei die Bodenverdichtungsmaschine (1) einen Vibrationsantrieb (16) umfasst, der zur Erregung einer Vibration an dem Rad (7) oder der Walzenbandage (5) ausgebildet ist, wobei der Vibrationsantrieb (16) den elektrischen Motor (11) umfasst und ausschließlich elektrisch betreibbar ist,
**dadurch gekennzeichnet, dass** der Vibrationsantrieb (16) eine elektrische Bremse (12) umfasst, die derart ausgebildet ist, dass sie die Nachlaufzeit des Vibrationsantriebs (16) verkürzt und beim Bremsen elektrische Energie zurückgewinnt, und dass die elektrische Bremse (12) einen Kondensator umfasst, der derart ausgebildet ist, dass er beim Bremsen ladbar und die gespeicherte Energie zum Anlaufen des Vibrationsantriebs (16) nutzbar ist.

2. Bodenverdichtungsmaschine (1) nach Anspruch 1,
**dadurch gekennzeichnet,**
**dass** sie wenigstens eines der folgenden Merkmale umfasst:
- der Fahrantrieb (4) umfasst einen elektrischen Motor (11) und ist ausschließlich elektrisch betreibbar; und/oder
- der Lenkantrieb (9) umfasst einen elektrischen Motor (11) und ist ausschließlich elektrisch betreibbar.

3. Bodenverdichtungsmaschine (1) nach einem der vorhergehenden Ansprüche,
**dadurch gekennzeichnet,**
**dass** der Vibrationsantrieb (16) mit dem elektrischen Motor (11) in dem Rad (7) oder der Walzenbandage (5) angeordnet ist.

4. Bodenverdichtungsmaschine (1) nach einem der vorhergehenden Ansprüche, **dadurch gekennzeichnet,**
**dass** die gesamte Bodenverdichtungsmaschine (1) derart ausgebildet ist, dass sie ausschließlich elektrisch über elektrische Motoren (11) betreibbar ist.

5. Bodenverdichtungsmaschine (1) nach einem der vorhergehenden Ansprüche, **dadurch gekennzeichnet,**
**dass** sämtliche elektrischen Motoren (11) Synchronmotoren sind und/oder eine Wasserkühlung aufweisen.

6. Bodenverdichtungsmaschine (1) nach einem der vorhergehenden Ansprüche, **dadurch gekennzeichnet,**
**dass** die Bodenverdichtungsmaschine (1) wenigstens zwei elektrische Energiespeicher (10) umfasst, die getrennt voneinander an unterschiedlichen Orten der Bodenverdichtungsmaschine (1) angeordnet sind.

7. Bodenverdichtungsmaschine (1) nach Anspruch 6, **dadurch gekennzeichnet,**
**dass** die elektrischen Energiespeicher (10) erschütterungsresistent ausgebildet und/oder schwingungsgedämpft an der Bodenverdichtungsmaschine (1) angeordnet sind.

8. Bodenverdichtungsmaschine (1) nach einem der Ansprüche 6-7, **dadurch gekennzeichnet,**
**dass** wenigstens ein elektrischer Energiespeicher (10) in dem Rad (7) oder der Walzenbandage (5) angeordnet ist.

9. Verfahren (17) zum Betrieb einer Bodenverdichtungsmaschine (1) nach einem der vorhergehenden Ansprüche, umfassend den Schritt:
- Antreiben (18), insbesondere ausschließliches Antreiben (18), wenigstens eines Fahrwerks (6) und/oder der Lenkung und/oder eines Vibrationsantriebs (16) der Bodenverdichtungsmaschine (1) über einen elektrischen Motor (11), wobei der elektrische Motor (11) ein Asynchronmotor oder ein Synchronmotor ist und/oder eine Wasserkühlung aufweist.

10. Verfahren (17) nach Anspruch 9, **gekennzeichnet durch** wenigstens einen der folgenden Schritte:
- Ausschließliches Antreiben (18) der gesamten Bodenverdichtungsmaschine (1) über elektrische Motoren (11); und/oder
- Erregen (19) einer Vibration in einem Rad (7) oder einer Walzenbandage (5) über einen, insbesondere in dem Rad (7) oder in der Walzenbandage (5) angeordneten, elektrischen Motor (11); und/oder
- Betreiben (20) eines elektrischen Motors (11) in einem Rad (7) oder einer Walzenbandage (5) durch einen ebenfalls in dem Rad (7) oder in der Walzenbandage (5) angeordneten elektrischen Energiespeicher (10); und/oder
- Bremsen (21) eines Vibrationsantriebs (16) in einem Rad (7) oder einer Walzenbandage (5) über einen elektrischen Motor (11), insbesondere unter Rückgewinnung von elektrischer Energie beim Bremsen; und/oder
- Aufladen (22) wenigstens eines elektrischen Energiespeichers (10) über Rückgewinnung von elektrischer Energie beim Bremsen und/oder Solarzellen (13) und/oder eine Brennstoffzelle (14) und/oder eine externe Stromquelle.

## Claims

1. A ground compaction machine (1) for compacting a ground (8), in particular a tandem roller, a single-drum roller, a rubber-wheeled roller or a trench roller, comprising
- a machine frame (3);
- at least one travel unit (6) with a wheel (7) or a roller drum (5),
- a travel drive (4) for driving the travel unit (6), and
- a steering drive (9) for adjusting the traveling direction of the ground compaction machine (1),
- at least one electric motor (11),
wherein the at least one electric motor (11) is an asynchronous or a synchronous motor and/or has water cooling, and wherein the ground compaction machine (1) comprises a vibratory drive (16) configured to excite a vibration at the wheel (7) or roller drum (5), the vibratory drive (16) comprising the electric motor (11) and being operated exclusively electrically
**characterized in that**
the vibratory drive (16) comprises an electric brake (12) configured to shorten the coast-down time of the vibratory drive (16) and to recover electric energy during braking, and **in that** the electric brake (12) comprises a capacitor configured such that it is chargeable during braking and the stored energy can be used to start the vibratory drive (16).

2. The ground compaction machine (1) according to claim 1,
**characterized in that**
it comprises at least one of the following features:
- the travel drive (4) comprises an electric motor (11) and is operated exclusively electrically; and/or
- the steering drive (9) comprises an electric motor (11) and is operated exclusively electrically.

3. The ground compaction machine (1) according to any one of the preceding claims, **characterized in that**
the vibratory drive (16) with the electric motor (11) is arranged inside the wheel (7) or the roller drum (5).

4. The ground compaction machine (1) according to any one of the preceding claims, **characterized in that**
the entire ground compaction machine (1) is configured such that it can be operated exclusively electrically via electric motors (11).

5. The ground compaction machine (1) according to any one of the preceding claims, **characterized in that**
all electric motors (11) are synchronous motors and/or have a water cooling.

6. The ground compaction machine (1) according to any one of the preceding claims, **characterized in that**
the ground compaction machine (1) comprises at least two electric energy storage devices (10) arranged separately from each other at different positions on the ground compaction machine (1).

7. The ground compaction machine (1) according to claim 6,
**characterized in that**
the electric energy storage devices (10) are shock-resistant and/or are arranged on the ground compaction machine (1) in a vibration-damped manner.

8. The ground compaction machine (1) according to any one of claims 6 or 7, **characterized in that**
at least one electric energy storage device (10) is arranged inside the wheel (7) or the roller drum (5).

9. A method (17) for operating a ground compaction machine (1) according to any one of the preceding claims, comprising the step of:
- driving (18), in particular exclusively driving (18), at least one travel unit (6) and/or the steering and/or a vibratory drive (16) of the ground compaction machine (1) via an electric motor (11), wherein the electric motor (11) is an asynchronous or a synchronous motor and/or has water cooling.

10. The method (17) according to claim 9,
**characterized by** at least one of the following steps:
- exclusively driving (18) the entire ground compaction machine (1) via electric motors (11); and/or
- exciting (19) a vibration in a wheel (7) or a roller drum (5) via an electric motor (11) arranged in particular inside the wheel (7) or inside the roller drum (5); and/or
- operating (20) an electric motor (11) inside a wheel (7) or a roller drum (5) using an electric energy storage device (10) also arranged inside the wheel (7) or inside the roller drum (5); and/or
- braking (21) a vibratory drive (16) inside a wheel (7) or a roller drum (5) via an electric motor (11), in particular with recovery of electric energy during braking; and/or
- charging (22) at least one electric energy storage device (10) via recovery of electric energy during braking and/or solar cells (13) and/or a fuel cell (14) and/or another external power source.

## Revendications

1. Machine de compactage de sol (1) pour le compactage d'un sol (8), plus particulièrement un rouleau tandem, un compacteur à cylindre, un compacteur à pneus ou un compacteur de tranchées, comprenant
- un châssis de machine (3),
- au moins un train de roulement (6) avec une roue (7) ou une bande de roulement (5),
- une transmission (4) pour entraîner le train de roulement (6), et
- une direction (9) pour ajuster la direction de déplacement de la machine de compactage de sol (1),
- au moins un moteur électrique (11),
dans laquelle l'au moins un moteur électrique (11) est un moteur asynchrone ou un moteur synchrone et/ou possède un refroidissement par eau et dans laquelle la machine de compactage de sol (1) comprend une transmission vibratoire (16) qui est conçue pour exciter une vibration sur la roue (7) ou la bande de roulement (5), dans laquelle la transmission vibratoire (16) comprend l'au moins un moteur électrique (11) et est peut être actionnée exclusivement électriquement,
**caractérisée en ce que** la transmission vibratoire (16) comprend un frein électrique (12) qui est conçu de façon à raccourcir le temps de décélération de la transmission vibratoire (16) et récupère de l'énergie électrique lors du freinage et **en ce que** le frein électrique (12) comprend un condensateur qui est conçu de façon à pouvoir être chargé lors du freinage et de sorte que l'énergie stockée peut être utilisée pour le démarrage de la transmission vibratoire (16).

2. Machine de compactage de sol (1) selon la revendication 1,
**caractérisée en ce que**
elle présente au moins l'une des caractéristiques suivantes :
- la transmission (4) comprend un moteur électrique (11) et est exclusivement actionnable électriquement ; et/ou
- la direction (9) comprend un moteur électrique (11) et est actionnable exclusivement électriquement.

3. Machine de compactage de sol (1) selon l'une des revendications précédentes, **caractérisée en ce que**
la transmission vibratoire (16) est disposée avec le moteur électrique (11) dans la roue (7) ou la bande de roulement (5).

4. Machine de compactage de sol (1) selon l'une des revendications précédentes, **caractérisée en ce que**
l'ensemble de la machine de compactage de sol (1) est conçu de façon à être actionnable exclusivement électriquement par des moteurs électriques (11).

5. Machine de compactage de sol (1) selon l'une des revendications précédentes, **caractérisée en ce que**
tous les moteurs électriques (11) sont des moteurs synchrones et/ou possèdent un refroidissement par eau.

6. Machine de compactage de sol (1) selon l'une des revendications précédentes, **caractérisée en ce que**
la machine de compactage de sol (1) comprend au moins deux accumulateurs d'énergie électrique (10) qui sont disposés séparément les uns des autres à différents endroits de la machine de compactage de sol (1).

7. Machine de compactage de sol (1) selon la revendication 6,
**caractérisée en ce que**
les accumulateurs d'énergie électrique (10) sont conçus pour être résistants aux chocs et/ou sont disposés sur la machine de compactage de sol (1) avec amortissement des vibrations.

8. Machine de compactage de sol (1) selon l'une des revendications 6 ou 7, **caractérisée en ce que**
au moins un accumulateur d'énergie électrique (10) est disposé dans la roue (7) ou la bande de roulement (5).

9. Procédé (17) pour le fonctionnement d'une machine de compactage de sol (1) selon l'une des revendications précédentes, comprenant l'étape suivante :
- entraînement (18), plus particulièrement entraînement exclusif (18), d'au moins un train de roulement (6) et/ou de la direction et/ou d'une transmission vibratoire (16) de la machine de compactage de sol (1) par un moteur électrique (11), dans lequel le moteur électrique (11) est un moteur asynchrone ou un moteur synchrone et/ou possède un refroidissement par eau.

10. Procédé (17) selon la revendication 9,
**caractérisé par** au moins l'une des étapes suivantes :
- entraînement exclusif (18) de l'ensemble de la machine de compactage de sol (1) par des moteurs électriques (11) ; et/ou
- excitation (19) d'une vibration dans une roue (7) ou une bande de roulement (5) par un moteur électrique (11), plus particulièrement disposé dans la roue (7) ou dans la bande de roulement (5) ; et/ou
- activation (20) d'un moteur électrique (11) dans une roue (7) ou une bande de roulement (5) par un accumulateur d'énergie électrique (10) également disposé dans la roue (7) ou dans la bande de roulement (5) ; et/ou
- freinage (21) d'une transmission vibratoire (16) dans une roue (7) ou une bande de roulement (5) par un moteur électrique (11), plus particulièrement avec récupération d'énergie électrique lors du freinage ; et/ou
- chargement (22) d'au moins un accumulateur d'énergie électrique (10) par récupération d'énergie électrique lors du freinage et/ou des cellules solaires (13) et/ou une pile à combustible (14) et/ou une source de courant externe.
